# EUROPEAN PATENT APPLICATION

(11) **EP 4 628 370 A1**
(43) Date of publication of application: **08.10.2025**
(21) Application number: 23896054.6
(22) Date of filing: 18.07.2023
(51) Int. Cl.: B60T 7/06, B60T 11/00, B60T 13/13, B60T 13/14, B60T 17/18

(54) **VEHICLE BRAKE SYSTEM AND VEHICLE HAVING SAME**

(30) Priority: 30.11.2022 CN 202211514374
(71) Applicant: BYD Company Limited, Shenzhen, Guangdong 518118 (CN)
(72) Inventor: LI, Yihui, Shenzhen, Guangdong 518118 (CN); XIONG, Wei, Shenzhen, Guangdong 518118 (CN); YAO, Yugang, Shenzhen, Guangdong 518118 (CN)
(74) Representative: Mathys & Squire
(86) International application number: PCT/CN2023/107884
(87) International publication number: WO 2024/113891

(57) **Abstract**

A vehicle brake system (1), comprising: a plurality of wheel cylinders (100), a main pressure building module (200), a redundant pressure building module (300) and a brake master cylinder assembly (400); the main pressure building module (200) is separately connected to the plurality of wheel cylinders (100) and is used for conveying brake fluid to the plurality of wheel cylinders (100); the redundant pressure building module (300) is connected to at least one wheel cylinder (100) and is used for conveying the brake fluid to the at least one wheel cylinder (100); and the brake master cylinder assembly (400) is separately connected to the plurality of wheel cylinders (100) and is used for conveying the brake fluid to the plurality of wheel cylinders (100). Further disclosed is a vehicle.

## Description

### CROSS-REFERENCE TO RELATED APPLICATIONS

The present disclosure claims priority to Chinese Patent Application No. 202211514374.6, filed on November 30, 2022 and entitled "VEHICLE BRAKE SYSTEM AND VEHICLE HAVING SAME". The entire content of the above-referenced application is incorporated herein by reference.

### FIELD

The present disclosure relates to the field of vehicle technologies, and more specifically, a vehicle brake system and a vehicle having same.

### BACKGROUND

A vehicle brake system in a related system usually includes a plurality of wheel cylinders, a pressure building module, and a master brake cylinder assembly. The pressure building module is configured to convey brake fluid to the plurality of wheel cylinders, to output brake pressure to brake a vehicle. However, when the pressure building module has a fault and cannot output braking force, or the brake pressure outputted by the pressure building module cannot meet the braking demand, the vehicle has insufficient braking force, resulting in low braking safety.

### SUMMARY

The present disclosure is intended to resolve at least one of technical problems in the related art. One objective of the present disclosure is to provide a vehicle brake system. The vehicle brake system has advantages such as strong braking force output, high braking response speed, and high braking safety.

Embodiment of the present disclosure further provides a vehicle having the foregoing vehicle brake system.

To achieve the foregoing objective, an embodiment of a first aspect of the present disclosure provides a vehicle brake system, which includes a plurality of wheel cylinders, a master pressure building module, a redundant pressure building module, and a master brake cylinder assembly. The master pressure building module is respectively connected to the plurality of wheel cylinders, and is configured to convey brake fluid to the plurality of wheel cylinders. The redundant pressure building module is connected to at least one wheel cylinder, and is configured to convey brake fluid to the at least one wheel cylinder. The master brake cylinder assembly is respectively connected to the plurality of wheel cylinders, and is configured to convey brake fluid to the plurality of wheel cylinders.

The vehicle brake system in this embodiment of the present disclosure is provided not only with the master pressure building module and the master brake cylinder assembly, but also with the redundant pressure building module, which resolves a problem of insufficient braking force of the vehicle and relatively low braking safety as a result of brake pressure failing to meet the braking demand when the pressure building module of the vehicle brake system is faulty and cannot output braking force, which has advantages such as strong braking force output, high braking response speed, and high braking safety.

According to some embodiments of the present disclosure, the vehicle brake system has a plurality of braking modes between which the vehicle brake system is automatically switchable. In different braking modes, the master pressure building module, the redundant pressure building module, or the master brake cylinder assembly separately convey brake fluid to the wheel cylinders, or the master pressure building module and the redundant pressure building module jointly convey brake fluid to the wheel cylinders, or the master pressure building module and the master brake cylinder assembly jointly convey brake fluid to the wheel cylinders, or the redundant pressure building module and the master brake cylinder assembly jointly conveying brake fluid to the wheel cylinders.

According to some embodiments of the present disclosure, the master brake cylinder assembly and the master pressure building module are arranged separately and spaced apart.

According to some embodiments of the present disclosure, the master brake cylinder assembly is mounted to the redundant pressure building module.

According to some embodiments of the present disclosure, a first output flow channel is constructed in the master pressure building module. The first output flow channel is connected to the plurality of wheel cylinders. A second output flow channel is constructed in the redundant pressure building module. The second output flow channel is connected to the at least one wheel cylinder.

According to some embodiments of the present disclosure, the vehicle brake system further includes a first switching flow channel. The first switching flow channel is respectively connected to the first output flow channel and the master brake cylinder assembly. The master brake cylinder assembly is connected to the plurality of wheel cylinders through the first switching flow channel and the first output flow channel.

According to some embodiments of the present disclosure, the vehicle brake system further includes a second switching flow channel. The second switching flow channel is respectively connected to the second output flow channel and the master brake cylinder assembly. The master brake cylinder assembly is connected to the plurality of wheel cylinders through the second switching flow channel and the second output flow channel.

According to some embodiments of the present disclosure, the vehicle brake system further includes a master control valve, a redundant control valve, and a master cylinder control valve. The master control valve is arranged in the first output flow channel, and is configured to control connection/disconnection between the master pressure building module and the plurality of wheel cylinders. The redundant control valve is arranged in the second output flow channel, and is configured to control connection/disconnection between the redundant pressure building module and the at least one wheel cylinder. The master cylinder control valve is mounted to at least one of the master pressure building module and the redundant pressure building module. The master cylinder control valve is connected between the master brake cylinder assembly and the plurality of wheel cylinders, and is configured to control connection/disconnection between the master brake cylinder assembly and the plurality of wheel cylinders.

According to some embodiments of the present disclosure, the vehicle brake system further includes a brake pedal, a displacement sensor, a wheel cylinder pressure sensor, and a controller. The brake pedal is connected to the master brake cylinder assembly. The displacement sensor is configured to detect a movement position of at least one of the brake pedal and a piston of the master brake cylinder assembly. The wheel cylinder pressure sensor is connected to the plurality of wheel cylinders, and is configured to detect pressures of the plurality of wheel cylinders. The controller is respectively connected to the displacement sensor, a vehicle wheel speed sensor, the wheel cylinder pressure sensor, the master control valve, the redundant control valve, and the master cylinder control valve. The controller is configured to control closing/opening of the master control valve, the redundant control valve, and the master cylinder control valve based on a detection result of the displacement sensor and a detection result of at least one of the vehicle wheel speed sensor and the wheel cylinder pressure sensor.

According to some embodiments of the present disclosure, the controller is further respectively connected to the master pressure building module and the redundant pressure building module. The controller is configured to control, based on the detection result of the displacement sensor and the detection result of at least one of the vehicle wheel speed sensor and the wheel cylinder pressure sensor, the master pressure building module and the redundant pressure building module whether to build pressure.

According to some embodiments of the present disclosure, a plurality of controllers are arranged. The plurality of controllers include a master module controller and a redundant module controller. The master module controller is respectively connected to the displacement sensor, the vehicle wheel speed sensor, the wheel cylinder pressure sensor, the master control valve, the redundant control valve, and the master cylinder control valve. The master module controller is configured to control, based on the detection result of the displacement sensor and the detection result of at least one of the vehicle wheel speed sensor and the wheel cylinder pressure sensor, closing/opening of the master control valve and the master pressure building module whether to build pressure. The redundant module controller is respectively connected to the displacement sensor, the vehicle wheel speed sensor, the wheel cylinder pressure sensor, the master control valve, the redundant control valve, and the master cylinder control valve. The master module controller is configured to control, based on the detection result of the displacement sensor and the detection result of at least one of the vehicle wheel speed sensor and the wheel cylinder pressure sensor, closing/opening of the redundant control valve and whether the redundant pressure building module to build pressure. The master module controller or the redundant module controller is configured to control, based on the detection result of the displacement sensor and the detection result of at least one of the vehicle wheel speed sensor and the wheel cylinder pressure sensor, the closing/opening of the master cylinder control valve.

According to some embodiments of the present disclosure, the vehicle brake system further includes a first angle sensor, a first pressure sensor, a second angle sensor, a second pressure sensor, and a third pressure sensor. The first angle sensor is configured to detect an angle change of a motor of the master pressure building module. The first pressure sensor is configured to detect a pressure of brake fluid conveyed by the master pressure building module. The second angle sensor is configured to detect an angle change of a motor of the redundant pressure building module. The second pressure sensor is configured to detect a pressure of brake fluid conveyed by the redundant pressure building module. The third pressure sensor is configured to detect a pressure of conveyed brake fluid of the master brake cylinder assembly. The controller is further respectively with the first angle sensor, the first pressure sensor, the second angle sensor, the second pressure sensor, and the third pressure sensor. The controller is configured to: determine whether the master pressure building module is faulty based on detection results of the first angle sensor and the first pressure sensor, determine whether the master pressure building module is faulty based on detection results of the second angle sensor and the second pressure sensor, and determine whether the master brake cylinder assembly is faulty based on a detection result of the third pressure sensor.

According to some embodiments of the present disclosure, the vehicle brake system further includes a master liquid reservoir and a redundant liquid reservoir. The master liquid reservoir is connected to the master pressure building module. The redundant liquid reservoir is respectively connected to the redundant pressure building module, the master brake cylinder assembly, and the master liquid reservoir.

According to some embodiments of the present disclosure, the vehicle brake system further includes a brake pedal, a stroke simulator, and a simulator switch valve. The brake pedal is connected to the master brake cylinder assembly. The stroke simulator is respectively connected to the master brake cylinder assembly and the brake pedal, and is configured to feed back a damping force to the brake pedal. The simulator switch valve is separately connected to the stroke simulator and the master brake cylinder assembly, and is configured to control on/off of the stroke simulator and the master brake cylinder assembly.

According to some embodiments of the present disclosure, the vehicle brake system further includes a plurality of supercharging valves and a plurality of pressure reducing valves. The plurality of pressure increasing valves are connected to the plurality of wheel cylinders in one-to-one correspondence. Each pressure increasing valve is respectively connected to the master pressure building module, the redundant pressure building module, and the master brake cylinder assembly. The plurality of pressure reducing valves are connected to the plurality of wheel cylinders in one-to-one correspondence. Each pressure reducing valve is connected to the liquid reservoir.

According to an embodiment of a second aspect of the present disclosure, a vehicle is proposed, which includes the vehicle brake system according to the embodiment of the first aspect of the present disclosure.

The vehicle in the embodiment of the second aspect of the present disclosure uses the vehicle brake system in the embodiment of the first aspect of the present disclosure, which has advantages such as strong braking force output, high braking response speed, and high braking safety.

Additional aspects and advantages of the present disclosure are to be partially given in the following description, and partially become apparent in the following description or learned through the practice of the present disclosure.

### BRIEF DESCRIPTION OF THE DRAWINGS

The foregoing and/or additional aspects and advantages of the present disclosure become apparent and comprehensible from description of embodiments made with reference to the following drawings.
FIG. 1 is a principle diagram of a vehicle brake system according to an embodiment of the present disclosure;
FIG. 2 is a schematic block diagram of a vehicle brake system according to an embodiment of the present disclosure;
FIG. 3 is a schematic block diagram of a controller shown in FIG. 2; and
FIG. 4 is a schematic block diagram of a vehicle according to an embodiment of the present disclosure.

In the drawings:
Vehicle brake system 1,
Wheel cylinder 100,
Master pressure building module 200, First output flow channel 210, Master control valve 220, First angle sensor 230, First pressure sensor 240, Master liquid reservoir 250,
Redundant pressure building module 300, Second output flow channel 310, Redundant control valve 320, Second angle sensor 330, Second pressure sensor 340, Redundant liquid reservoir 350,
Master brake cylinder assembly 400, First switching flow channel 410, Second switching flow channel 420, Master cylinder control valve 430, Third pressure sensor 440, Piston 450
Brake pedal 500, Displacement sensor 510,
Stroke simulator 600, Simulator switch valve 610,
Pressure increasing valve 700, Pressure reducing valve 800.

### DETAILED DESCRIPTION

Embodiments described with reference to the drawings are exemplary, and the embodiments of the present disclosure are described in detail below.

In the description of the present disclosure, it should be understood that orientation or position relationships indicated by the terms such as "center", "longitudinal", "transverse", "length", "width", "thickness", "up", "down", "front", "rear", "left", "right", "vertical", "horizontal", "top", "bottom", "inside", "outside", "clockwise", "anticlockwise", "axial direction", "radial direction", and "circumferential direction" are based on orientation or position relationships shown in the drawings, and are merely used for ease and brevity of description of the present disclosure, rather than indicating or implying that the mentioned device or element needs to have a particular orientation or be constructed and operated in a particular orientation. Therefore, such terms should not be construed as a limitation on the present disclosure.

In the description of the present disclosure, a "first feature" and a "second feature" may include one or more features.

In the description of the present disclosure, "a plurality of" means two or more.

In the description of the present disclosure, that the first feature is "on" or "under" the second feature may include that the first feature and the second feature are in direct contact, or may include that the first feature and the second feature are not in direct contact but are in contact by using other features therebetween.

In the description of the present disclosure, that the first feature is "on", "above", or "over" the second feature includes that the first feature is directly above and obliquely above the second feature, or merely indicates that the first feature is at a higher horizontal position than the second feature.

A vehicle brake system 1 in an embodiment of the present disclosure is described below with reference to the drawings.

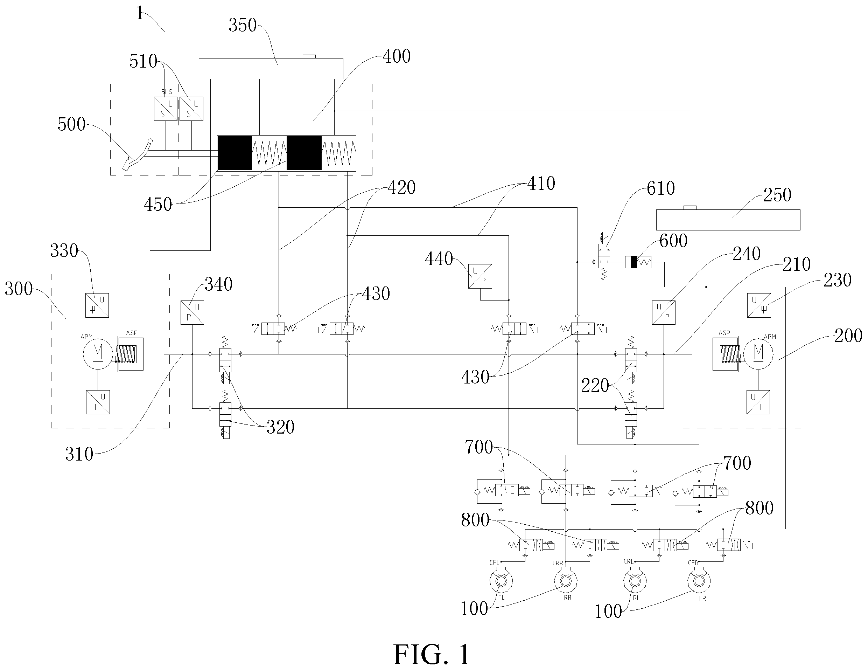

As shown in FIG. 1, the vehicle brake system 1 in this embodiment of the present disclosure includes a plurality of wheel cylinders 100, a master pressure building module 200, a redundant pressure building module 300, and a master brake cylinder assembly 400.

The master pressure building module 200 is respectively connected to the plurality of wheel cylinders 100, and is configured to convey brake fluid to the plurality of wheel cylinders 100. The redundant pressure building module 300 is connected to at least one wheel cylinder 100, and is configured to convey brake fluid to the at least one wheel cylinder 100. The master brake cylinder assembly 400 is respectively connected to the plurality of wheel cylinders 100, and is configured to convey brake fluid to the plurality of wheel cylinders 100.

In the vehicle brake system 1, the master pressure building module 200 may mainly output brake pressure, and the redundant pressure building module 300 may assist in outputting brake pressure. In other words, when the master pressure building module 200 fails or the brake pressure of the master pressure building module 200 is insufficient, the redundant pressure building module 300 may output brake pressure to brake a vehicle. In addition, when the master pressure building module 200 and the redundant pressure building module 300 are both faulty, the vehicle may be braked directly through the master brake cylinder assembly 400. The vehicle brake system 1 is provided not only with the master pressure building module 200 and the master brake cylinder assembly 400, but also with the redundant pressure building module 300, which resolves a problem of insufficient braking force of the vehicle and relatively low braking safety as a result of brake pressure failing to meet the braking demand when the pressure building module of the vehicle brake system 1 is faulty and cannot output braking force.

For example, the redundant pressure building module 300 may be directly connected to the wheel cylinder 100, or the redundant pressure building module 300 is connected to the wheel cylinder 100 through the master pressure building module 200. In other words, the redundant pressure building module 300 is indirectly connected to the wheel cylinder 100.

According to the vehicle brake system 1 in this embodiment of the present disclosure, the master pressure building module 200 is respectively connected to the plurality of wheel cylinders 100, and is configured to convey the brake fluid to the plurality of wheel cylinders 100. Therefore, when the vehicle needs to be braked, the master pressure building module 200 can simultaneously convey the brake fluid to the plurality of wheel cylinders 100, to implement pressure building of the wheel cylinders 100. Further, the brake pressure can be outputted by the master pressure building module 200 to brake the vehicle.

In addition, the redundant pressure building module 300 is connected to at least one wheel cylinder 100, and is configured to convey the brake fluid to the at least one wheel cylinder 100. In other words, the redundant pressure building module 300 may convey the brake fluid to only one wheel cylinder 100 or a part of the plurality of wheel cylinders 100. When the master pressure building module 200 is faulty or the brake pressure of the master pressure building module 200 is insufficient, the redundant pressure building module 300 may convey the brake fluid to a part of the plurality of wheel cylinders 100, so that the redundant pressure building module 300 may assist in braking of the vehicle through a part of the wheel cylinders 100, thereby improving the braking safety of the vehicle brake system 1. In addition, the redundant pressure building module 300 does not need to be in communication with the wheel cylinders 100, which helps simplify a structure of the vehicle brake system 1 and facilitate an arrangement.

In some embodiments of the present disclosure, the redundant pressure building module 300 may be in communication with the plurality of wheel cylinders 100. The redundant pressure building module 300 may simultaneously convey the brake fluid to the wheel cylinders 100, or may selectively convey the brake fluid to a part of the plurality of wheel cylinders 100 based on the braking condition. When the master pressure building module 200 is faulty or brake pressure of the master pressure building module 200 is insufficient, the redundant pressure building module 300 may simultaneously convey the brake fluid to the plurality of wheel cylinders 100, so that the redundant pressure building module 300 may assist in braking of the vehicle through the wheel cylinders 100, thereby improving the braking safety of the vehicle brake system 1. In addition, the redundant pressure building module 300 is in communication with the wheel cylinders 100, the redundant pressure building module 300 can simultaneously convey the brake fluid to the plurality of wheel cylinders 100. Therefore, the redundant pressure building module 300 can simultaneously build pressure for the plurality of wheel cylinders 100, the brake pressure outputted by the redundant pressure building module 300 is more balanced, and the braking effect is better.

In this way, the redundant pressure building module 300 can help the master pressure building module 200 to build pressure for the plurality of wheel cylinders 100. When the master pressure building module 200 is faulty, the redundant pressure building module 300 may output the brake pressure, so as to ensure that the vehicle brake system 1 can normally brake, which helps improve the braking safety of the vehicle. When the braking force outputted by the master pressure building module 200 cannot meet the braking demand, the redundant pressure building module 300 and the master pressure building module 200 may output the braking force together, so as to improve the braking force outputted by the vehicle brake system 1. As a result, the braking force outputted by the vehicle brake system 1 is stronger, and the braking effect is better. In addition, the master pressure building module 200 and the redundant pressure building module 300 simultaneously respond to the output braking force, so that the braking response speed is higher.

In addition, the master brake cylinder assembly 400 is respectively connected to the plurality of wheel cylinders 100, and is configured to convey the brake fluid to the plurality of wheel cylinders 100. In this way, when the master pressure building module 200 and the redundant pressure building module 300 are both faulty and cannot normally output the braking force, the vehicle brake system 1 may directly use the master brake cylinder assembly 400 to directly convey the brake fluid to the plurality of wheel cylinders 100, so that the master brake cylinder assembly 400 can directly build the pressure for the wheel cylinder 100 to brake the vehicle. After the braking of the vehicle is completed, fault information of the master pressure building module 200 and the redundant pressure building module 300 is checked, which further improves the braking safety of the vehicle.

As a result, the vehicle brake system 1 in this embodiment of the present disclosure has advantages such as strong braking force output, high braking response speed, and high braking safety.

In some specific embodiments of the present disclosure, the vehicle brake system 1 has a plurality of braking modes between which the vehicle brake system is automatically switchable. In different braking modes, the master pressure building module 200, the redundant pressure building module 300, or the master brake cylinder assembly 400 separately conveys the brake fluid to the wheel cylinder 100.

In other words, the vehicle brake system 1 has a mode in which the master pressure building module 200 brakes alone. In this case, the master pressure building module 200 conveys the brake fluid to the wheel cylinder 100 alone. In this case, the master pressure building module 200 brakes the vehicle alone.

The vehicle brake system 1 has a mode in which the redundant pressure building module 300 brakes alone. In this case, the redundant pressure building module 300 conveys the brake fluid to the wheel cylinder 100 alone. In this case, the redundant pressure building module 300 brakes the vehicle alone.

The vehicle brake system 1 has a mode in which the master brake cylinder assembly 400 brakes alone. In this case, the master brake cylinder assembly 400 conveys the brake fluid to the wheel cylinder 100 alone. In this case, the master brake cylinder assembly 400 brakes the vehicle alone.

In some specific embodiments of the present disclosure, the vehicle brake system 1 has a plurality of braking modes that can be automatically switched. In different braking modes, at least two of the master pressure building module 200, the redundant pressure building module 300, and the master brake cylinder assembly 400 jointly convey the brake fluid to the wheel cylinder 100.

For example, the vehicle brake system 1 has a mode in which the master pressure building module 200 and the redundant pressure building module 300 jointly build pressure. In this case, two cases are divided. A first case is as follows. The master pressure building module 200 conveys the brake fluid to the wheel cylinders 100. The redundant pressure building module 300 conveys the brake fluid to at least one wheel cylinder 100. In this case, at least one wheel cylinder 100 receives the brake fluid of the master pressure building module 200 and the brake fluid of the redundant pressure building module 300, and the braking force is higher. A second case is as follows. The master pressure building module 200 conveys the brake fluid to one part of the wheel cylinders 100. The redundant pressure building module 300 conveys the brake fluid to another part of the wheel cylinders 100. The brake fluid is conveyed more accurately.

The vehicle brake system 1 a mode in which the master pressure building module 200 and the master brake cylinder assembly 400 jointly build pressure. At this moment, two cases can be distinguished. A first case is as follows. The master pressure building module 200 conveys the brake fluid to the wheel cylinders 100. The master brake cylinder assembly 400 conveys the brake fluid to the wheel cylinders 100. In this case, all the wheel cylinders 100 receive the brake fluid of the master pressure building module 200 and the brake fluid of the master brake cylinder assembly 400, and the braking force is higher. A second case is as follows. The master pressure building module 200 conveys the brake fluid to one part of the wheel cylinders 100. The master brake cylinder assembly 400 conveys the brake fluid to another part of the wheel cylinders 100. The brake fluid is conveyed more accurately.

In some specific embodiments of the present disclosure, as shown in FIG. 1, the master brake cylinder assembly 400 and the master pressure building module 200 are arranged separately and spaced apart. In this way, the master brake cylinder assembly 400 and the master pressure building module 200 are not in direct contact. It may be understood that the vehicle brake system 1 frequently uses the master pressure building module 200 during braking. By spacing the master brake cylinder assembly 400 apart from the master pressure building module 200, vibration generated during operation of the master pressure building module 200 is not transmitted to the master brake cylinder assembly 400, which prevents the master brake cylinder assembly 400 from producing vibration and effectively avoids vibration noise, thereby improving riding comfort.

In addition, the master brake cylinder assembly 400 and the master pressure building module 200 are separately arranged, so that the master brake cylinder assembly 400 and the master pressure building module 200 may be separately arranged. In addition, a volume of each of the master brake cylinder assembly 400 and the master pressure building module 200 is relatively small. As a result, mounting and arrangement are more convenient, and layout is also more flexible.

In some specific embodiments of the present disclosure, as shown in FIG. 1, the master brake cylinder assembly 400 is mounted to the redundant pressure building module 300. The volume of the redundant pressure building module 300 is smaller than that the master pressure building module 200. By mounting the master brake cylinder assembly 400 and the redundant pressure building module 300 together, an entire volume of the master brake cylinder assembly 400 and the redundant pressure building module 300 are not excessively large, thereby facilitating arrangement. In addition, the redundant pressure building module 300 inputs the brake fluid to the wheel cylinder 100 only when the master pressure building module 200 is faulty or the braking force of the master pressure building module 200 is insufficient. In other words, the redundant pressure building module 300 has a relatively low operating frequency, and does not frequently transmit the vibration to the master brake cylinder assembly 400. In addition, the master brake cylinder assembly 400 and the redundant pressure building module 300 can be disassembled together, which reduces disassembling steps and a required mounting space.

In some specific embodiments of the present disclosure, as shown in FIG. 1, the master pressure building module 200 is constructed with a first output flow channel 210. The first output flow channel 210 is connected to the plurality of wheel cylinders 100. The redundant pressure building module 300 is constructed with a second output flow channel 310. The second output flow channel 310 is connected to the at least one wheel cylinder 100. The first output flow channel 210 may be a channel. The second output flow channel 310 may be a channel.

In other words, the master pressure building module 200 and the redundant pressure building module 300 are respectively in communication with the wheel cylinder 100 through different output flow channels. In this way, the master pressure building module 200 may convey the brake fluid to the plurality of wheel cylinders 100 through the first output flow channel 210. The redundant pressure building module 300 may convey the brake fluid to the at least one wheel cylinder 100 through the second output flow channel 310. The conveying of the brake fluid to the plurality of wheel cylinders 100 through the master pressure building module 200 does not interfere with the conveying of the brake fluid to the at least one wheel cylinder 100 through the redundant pressure building module 300. In this way, the conveying of the brake fluid to the wheel cylinder 100 through the master pressure building module 200 is smoother, and the conveying of the brake fluid to the wheel cylinder 100 through the redundant pressure building module 300 is smoother, whip help the master pressure building module 200 and the redundant pressure building module 300 respectively build pressure in the wheel cylinder 100, thereby improving the braking response speed of the vehicle brake system 1.

In addition, when the first output flow channel 210 is damaged, a connection between the redundant pressure building module 300 and the wheel cylinder 100 is not affected at all. When the second output flow channel 310 is damaged, a connection between the master pressure building module 200 and the wheel cylinder 100 is not affected at all. The vehicle brake system 1 has higher redundancy, and the vehicle brake system 1 has more reliable braking.

In some specific embodiments of the present disclosure, as shown in FIG. 1, the vehicle brake system 1 further includes a first switching flow channel 410.

The first switching flow channel 410 is respectively connected to the master pressure building module 200 and the master brake cylinder assembly 400. The master brake cylinder assembly 400 is connected to the plurality of wheel cylinders 100 through the first switching flow channel 410, the master pressure building module 200, and the first output flow channel 210. The first switching flow channel 410 may be a channel or a pipe.

In this way, when the master pressure building module 200 and the redundant pressure building module 300 are faulty, the master brake cylinder assembly 400 may convey the brake fluid to the plurality of wheel cylinders 100 through the first switching flow channel 410.

In some specific embodiments of the present disclosure, as shown in FIG. 1, the vehicle brake system 1 further includes a second switching flow channel 420.

The second switching flow channel 420 is respectively connected to the redundant pressure building module 300 and the master brake cylinder assembly 400. The master brake cylinder assembly 400 is connected to the plurality of wheel cylinders 100 through the second switching flow channel 420, the redundant pressure building module 300, and the second output flow channel 310. The second switching flow channel 420 may be a channel or a pipe.

In this way, when the master pressure building module 200 and the redundant pressure building module 300 are faulty, the master brake cylinder assembly 400 may convey the brake fluid to the plurality of wheel cylinders 100 through the second switching flow channel 420.

In some specific embodiments of the present disclosure, as shown in FIG. 1, the vehicle brake system 1 may have both the first switching flow channel 410 and the second switching flow channel 420, which helps increase a rate at which the master brake cylinder assembly 400 conveys the brake fluid to the plurality of wheel cylinders 100, thereby improving the braking response speed of the vehicle brake system 1. In addition, the first switching flow channel 410 and the second switching flow channel 420 may have mutual redundancy, to improve braking reliability of the master brake cylinder assembly 400.

In some specific embodiments of the present disclosure, as shown in FIG. 1, the vehicle brake system 1 further includes a master control valve 220, a redundant control valve 320, and a master cylinder control valve 430.

The master control valve 220 is arranged in the first output flow channel 210, and is configured to control connection/disconnection between the master pressure building module 200 and the plurality of wheel cylinders 100. The redundant control valve 320 is arranged in the second output flow channel 310, and is configured to control connection/disconnection between the redundant pressure building module 300 and the at least one wheel cylinder 100. The master cylinder control valve 430 is mounted to the master pressure building module 200 and the redundant pressure building module 300. The master cylinder control valve 430 is connected between the master brake cylinder assembly 400 and the plurality of wheel cylinders 100, and is configured to control connection/disconnection between the master brake cylinder assembly 400 and the plurality of wheel cylinders 100.

In this way, when the master pressure building module 200 can normally build pressure and the pressure building capability can reach a required value, the master control valve 220 may be turned on, and the redundant control valve 320 and the master cylinder control valve 430 may be turned off. In this way, the master pressure building module 200 may convey the brake fluid to the plurality of wheel cylinders 100. The redundant pressure building module 300 and the master brake cylinder assembly 400 do not convey the brake fluid to the plurality of wheel cylinders 100. In this case, only the master pressure building module 200 can participate in braking.

When the master pressure building module 200 is faulty and the redundant pressure building module 300 can normally build pressure, the redundant control valve 320 may be turned on, and the master control valve 220 and the master cylinder control valve 430 may be turned off. In this way, the redundant pressure building module 300 can convey the brake fluid to the at least one wheel cylinder 100. The master pressure building module 200 and the master brake cylinder assembly 400 do not convey the brake fluid to the plurality of wheel cylinders 100. In this case, only the redundant pressure building module 300 can participate in braking.

When the pressure building capability of the master pressure building module 200 cannot reach the required value, the master control valve 220 and the redundant control valve 320 may be turned on, and the master cylinder control valve 430 may be turned off. In this way, the master pressure building module 200 and the redundant pressure building module 300 may simultaneously convey the brake fluid to the plurality of wheel cylinders 100. The master brake cylinder assembly 400 does not convey the brake fluid to the plurality of wheel cylinders 100. The master pressure building module 200 and the redundant pressure building module 300 simultaneously participate in the braking, to ensure that the vehicle brake system 1 has sufficient braking force and a fast braking response.

When the master pressure building module 200 and the redundant pressure building module 300 are both faulty, the master cylinder control valve 430 may be turned on, and the master control valve 220 and the redundant control valve 320 may be turned off. In this way, the master brake cylinder assembly 400 may directly convey the brake fluid to the plurality of wheel cylinders 100. The master pressure building module 200 and the redundant pressure building module 300 do not convey the brake fluid to the plurality of wheel cylinders 100. In this case, only the master brake cylinder assembly 400 can participate in the braking.

Therefore, a communication situation between the master pressure building module 200, the redundant pressure building module 300, and the master brake cylinder assembly 400 and the plurality of wheel cylinders 100 may be adjusted through cooperative operation of the master control valve 220, the redundant control valve 320, and the master cylinder control valve 430, which has a simple structure and facilitates control.

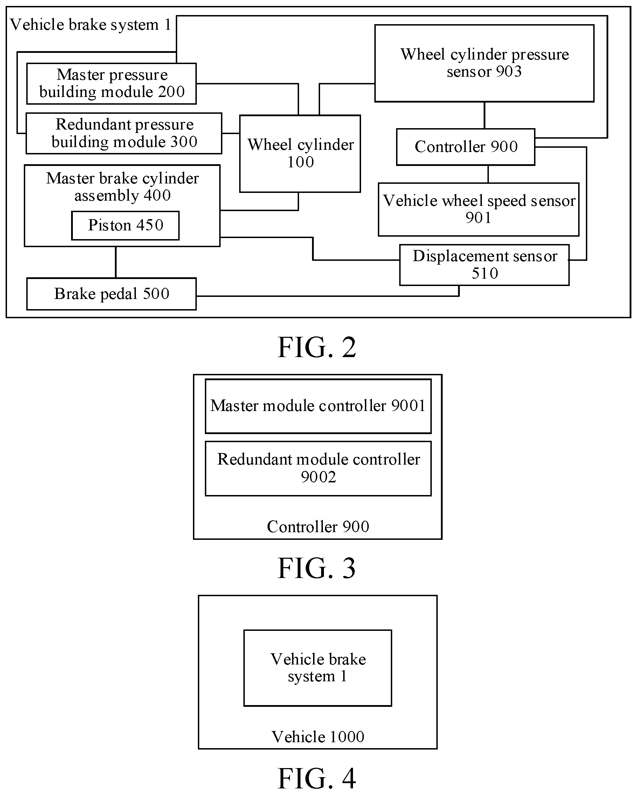

In some specific embodiments of the present disclosure, as shown in FIG. 1 and FIG. 2, the vehicle brake system 1 further includes a brake pedal 500, a displacement sensor 510, a vehicle wheel speed sensor 901, a wheel cylinder pressure sensor 903, and a controller 900.

The brake pedal 500 is connected to the master brake cylinder assembly 400. The displacement sensor 510 is configured to detect a movement position of at least one of the brake pedal 500 and a piston 450 of the master brake cylinder assembly 400. The wheel cylinder pressure sensor 903 is connected to the plurality of wheel cylinders 100, and is configured to detect pressures of the plurality of wheel cylinders 100. The controller 900 is respectively connected to the displacement sensor 510, the vehicle wheel speed sensor 901, the wheel cylinder pressure sensor 903, the master control valve 220, the redundant control valve 320, and the master cylinder control valve 430. The controller 900 is configured to control closing/opening of the master control valve 220, the redundant control valve 320, and the master cylinder control valve 430 based on a detection result of the displacement sensor 510 and a detection result of at least one of the vehicle wheel speed sensor 901 and the wheel cylinder pressure sensor 903.

The displacement sensor 510 may detect only the movement position of the brake pedal 500. Alternatively, the displacement sensor 510 may detect only the movement position of the piston 450 of the master brake cylinder assembly 400. Alternatively, two displacement sensors 510 are provided. The two displacement sensors 510 respectively detect the movement position of the brake pedal 500 and the movement position of the piston 450 of the master brake cylinder assembly 400.

Specifically, if the controller 900 detects a movement in the brake pedal 500 or the piston 450 of the master brake cylinder assembly 400, it indicates that the driver has a braking intention and needs to brake the vehicle. The master pressure building module 200 starts to build pressure and brakes. In addition, the controller 900 may obtain a vehicle speed through the vehicle wheel speed sensor 901, to determine whether the vehicle is decelerating, and to determine whether the braking force outputted by relying on only the master pressure building module 200 can meet braking force required by a current vehicle speed. In addition, the controller 900 may obtain pressures in the plurality of wheel cylinders 100 based on a third controller, to determine whether the master pressure building module 200 or the redundant pressure building module 300 can normally build pressure.

The controller 900 may simultaneously obtain detection information of the displacement sensor 510, detection information of the vehicle wheel speed sensor 901, and detection information of the wheel cylinder pressure sensor 903. Therefore, when a driver steps on the brake pedal 500, the controller 900 may synchronously obtain the vehicle speed and the pressures in the plurality of wheel cylinders 100 when the controller 900 obtains the movement position of the brake pedal 500 or the movement position of the piston 450 of the master brake cylinder assembly 400. Therefore, the controller 900 has a higher response speed.

Alternatively, the controller 900 may first obtain the detection information of the displacement sensor 510. If the controller 900 detects a movement of the brake pedal 500 or the master brake cylinder assembly 400, the controller 900 is configured to: obtain the detection information of the vehicle wheel speed sensor 901 and the detection information of the wheel cylinder pressure sensor 903 again; and control closing/opening of the master control valve 220, the redundant control valve 320, and the master cylinder control valve 430 based on a detection result of the displacement sensor 510 and a detection result of at least one of the vehicle wheel speed sensor 901 and the wheel cylinder pressure sensor 903. If the controller 900 does not detect a movement of the brake pedal 500 or the master brake cylinder assembly 400, the controller does not need to obtain the detection information of the vehicle wheel speed sensor 901 and the detection information of the wheel cylinder pressure sensor 903. In this way, operation steps of the controller 900 may be simplified, which help reduce costs of the controller 900.

In some specific embodiments of the present disclosure, the controller 900 is further respectively connected to the master pressure building module 200 and the redundant pressure building module 300. The controller 900 is configured to control, based on the detection result of the displacement sensor 510 and the detection result of at least one of the vehicle wheel speed sensor 901 and the wheel cylinder pressure sensor 903, the master pressure building module 200 and the redundant pressure building module 300 whether to build pressure.

In this way, if the controller 900 detects a movement of the brake pedal 500 or the piston 450 of the master brake cylinder assembly 400s, and the controller 900 determines that the pressure building capability of the master pressure building module 200 meets a demand at the current vehicle speed, the controller 900 controls the master pressure building module 200 to build pressure. If the vehicle does not decelerate or the pressures in the plurality of wheel cylinders 100 do not change after the master pressure building module 200 builds the pressure, it indicates that the master pressure building module 200 fails. In this case, the master control valve 220 may be turned off and the redundant control valve 320 may be turned on. In other words, the controller 900 controls the master pressure building module 200 to stop building the pressure and controls the redundant pressure building module 300 to build pressure. If the vehicle still does not decelerate or the pressures in the wheel cylinders 100 still do not change, it indicates that the redundant pressure building module 300 fails. In this case, the redundant control valve 320 and the master control valve 220 may be turned off. The controller 900 controls both the master pressure building module 200 and the redundant pressure building module 300 not to build the pressure, and turns on the master cylinder control valve 430, to directly convey the brake fluid to the plurality of wheel cylinders 100 through the master brake cylinder assembly 400, so as to brake the vehicle.

In this way, the controller 900 is configured to control, based on the detection result of the displacement sensor 510 and the detection result of at least one of the vehicle wheel speed sensor 901 and the wheel cylinder pressure sensor 903, the master pressure building module 200 and the redundant pressure building module 300 whether to build pressure, so that the vehicle brake system 1 can quickly perform the braking response and meet the braking demand of the vehicle. In addition, when the master pressure building module 200 is faulty, the controller 900 may control the master pressure building module 200 to stop building the pressure, to avoid further failure and damage of the master pressure building module 200. In addition, when the redundant pressure building module 300 is faulty, the controller 900 may control the redundant pressure building module 300 to stop building the pressure, to avoid further failure and damage of the redundant pressure building module 300, which helps improve reliability of the vehicle brake system 1.

In some specific embodiments of the present disclosure, as shown in FIG. 1 to FIG. 3, a plurality of controllers 900 are provided, which include a master module controller 9001 and a redundant module controller 9002. The master module controller 9001 is respectively connected to the displacement sensor 510, the vehicle wheel speed sensor 901, the wheel cylinder pressure sensor 903, the master control valve 220, the redundant control valve 320, and the master cylinder control valve 430. The master module controller 9001 is configured to control, based on the detection result of the displacement sensor 510 and the detection result of at least one of the vehicle wheel speed sensor 901 and the wheel cylinder pressure sensor 903, closing/opening of the master control valve 220 and the master pressure building module 200 whether to build pressure.

The redundant module controller 9002 is respectively connected to the displacement sensor 510, the vehicle wheel speed sensor 901, the wheel cylinder pressure sensor 903, the master control valve 220, the redundant control valve 320, and the master cylinder control valve 430. The redundant module controller 9002 is configured to control, based on the detection result of the displacement sensor 510 and the detection result of at least one of the vehicle wheel speed sensor 901 and the wheel cylinder pressure sensor 903, closing/opening of the redundant control valve 320 and whether the redundant pressure building module 300 to build pressure.

The master module controller 9001 or the redundant module controller 9002 is connected to the displacement sensor 510, the vehicle wheel speed sensor 901, the wheel cylinder pressure sensor 903, the master control valve 220, the redundant control valve 320, and the master cylinder control valve 430. The master module controller 9001 is configured to control, based on the detection result of the displacement sensor 510 and the detection result of at least one of the vehicle wheel speed sensor 901 and the wheel cylinder pressure sensor 903, the closing/opening of the master cylinder control valve 430.

In some specific embodiments of the present disclosure, as shown in FIG. 1, the vehicle brake system 1 further includes a first angle sensor 230, a first pressure sensor 240, a second angle sensor 330, a second pressure sensor 340, and a third pressure sensor 440.

The first angle sensor 230 is configured to detect an angle change of a motor of the master pressure building module 200. The first pressure sensor 240 is configured to detect a pressure of a conveyed brake fluid of the master pressure building module 200. The second angle sensor 330 is configured to detect an angle change of a motor of the redundant pressure building module 300. The second pressure sensor 340 is configured to detect a pressure of a conveyed brake fluid of the redundant pressure building module 300. The third pressure sensor 440 is configured to detect a pressure of a conveyed brake fluid of the master brake cylinder assembly 400.

The controller 900 is further respectively with the first angle sensor 230, the first pressure sensor 240, the second angle sensor 330, the second pressure sensor 340, and the third pressure sensor 440. The controller 900 is configured to: determine whether the master pressure building module 200 is faulty based on detection results of the first angle sensor 230 and the first pressure sensor 240, determine whether the master pressure building module 200 is faulty based on detection results of the second angle sensor 330 and the second pressure sensor 340, and determine whether the master brake cylinder assembly 400 is faulty based on a detection result of the third pressure sensor 440.

Specifically, if the controller 900 controls the master pressure building module 200 to build pressure, but the controller 900 detects an angle change of the motor of the master pressure building module 200 through the first angle sensor 230, it indicates that the motor of the master pressure building module 200 is faulty. If the controller 900 detects an abnormal change in the pressure of the brake fluid conveyed by the master pressure building module 200 through the first pressure sensor 240, it indicates that the master pressure building module 200 cannot normally convey the brake fluid.

In addition, if the controller 900 controls the redundant pressure building module 300 to build pressure, but the controller 900 does not detect a change in the angle of the motor of the redundant pressure building module 300 through the second angle sensor 330, it indicates that the motor of the redundant pressure building module 300 is faulty. If the controller 900 detects an abnormal change in the pressure of the brake fluid conveyed by the redundant pressure building module 300 through the second pressure sensor 340, it indicates that the redundant pressure building module 300 cannot normally convey the brake fluid.

In addition, if the controller 900 controls both the master pressure building module 200 and the redundant pressure building module 300 to stop building the pressure, and the master brake cylinder assembly 400 directly conveys the brake fluid to the plurality of wheel cylinders 100, the controller 900 obtains detection information of the third pressure sensor 440, and may determine whether the pressure of the brake fluid conveyed by the master brake cylinder assembly 400 is abnormal based on the detection information of the wheel cylinder pressure sensor 903, so as to determine whether the master brake cylinder assembly 400 is faulty.

In some specific embodiments of the present disclosure, as shown in FIG. 1, the vehicle brake system 1 further includes a master liquid reservoir 250 and a redundant liquid reservoir 350.

The master liquid reservoir 250 is connected to the master pressure building module 200. The redundant liquid reservoir 350 is respectively connected to the redundant pressure building module 300, the master brake cylinder assembly 400, and the master liquid reservoir 250.

In this way, an external pipeline does not need to be additionally arranged. The master liquid reservoir 250 may directly provide the master pressure building module 200 with the brake fluid. The redundant liquid reservoir 350 may directly provide the redundant pressure building module 300 with the brake fluid. Therefore, the brake fluid can quickly reach the master pressure building module 200 or the redundant pressure building module 300, a pressure building speed is higher, and the braking response of the vehicle brake system 1 is faster.

In addition, the redundant liquid reservoir 350 is connected to the master liquid reservoir 250. If a relatively small amount of brake fluid exists in the redundant liquid reservoir 350, the master liquid reservoir 250 may supplement the redundant liquid reservoir 350 with the brake fluid. Similarly, if a relatively small amount of brake fluid exists in the master liquid reservoir 250, the redundant liquid reservoir 350 may supplement the master liquid reservoir 250 with the brake fluid, so as to ensure that the brake fluid in the master liquid reservoir 250 and the brake fluid in the redundant liquid reservoir 350 are both relatively sufficient, to meet the pressure building demand of the master pressure building module 200 and the pressure building demand of the redundant pressure building module 300.

In some specific embodiments of the present disclosure, as shown in FIG. 1, the vehicle brake system 1 further includes a brake pedal 500, a stroke simulator 600, and a simulator switch valve 610.

The brake pedal 500 is connected to the master brake cylinder assembly 400. The stroke simulator 600 is respectively connected to the master brake cylinder assembly 400 and the brake pedal 500, and is configured to feed back a damping force to the brake pedal 500. The simulator switch valve 610 is respectively connected to the stroke simulator 600 and the master brake cylinder assembly 400, and is configured to control on/off of the stroke simulator 600 and the master brake cylinder assembly 400.

Because of the stroke simulator 600 arrangement, when the driver steps on the brake pedal 500, the stroke simulator 600 may feed back a damping force to the brake pedal 500, to indirectly feed back the damping force to a foot of the driver, and the driver may determine, based on the damping force that is fed back, whether to step on and move the brake pedal 500. In this way, the driver can slowly step on the brake pedal 500, to avoid an excessively sensitive braking response as a result of the driver suddenly stepping on the brake pedal 500 by an excessively large distance. Therefore, more comfortable vehicle brake is achieved.

In some specific embodiments of the present disclosure, as shown in FIG. 1, the vehicle brake system 1 further includes a plurality of pressure increasing valves 700 and a plurality of pressure reducing valves 800.

The plurality of pressure increasing valves 700 are connected to the plurality of wheel cylinders 100 in one-to-one correspondence. Each pressure increasing valve 700 is respectively connected to the master pressure building module 200, the redundant pressure building module 300, and the master brake cylinder assembly 400. The plurality of pressure reducing valves 800 are connected to the plurality of wheel cylinders 100 in one-to-one correspondence. Each pressure reducing valve 800 is connected to the liquid reservoir.

In this way, when the brake pedal 500 is stepped, the controller 900 controls the plurality of pressure increasing valves 700 to be turned on and the pressure reducing valves 800 to be turned off, so that the brake fluid can enter the plurality of wheel cylinders 100. When a wheel cylinder 100 has a sufficient pressure, in other words, when the pressure of the wheel cylinder 100 meets the braking demand, the pressure increasing valve 700 corresponding to the wheel cylinder 100 may be turned off. In addition, because the plurality of pressure increasing valves 700 are in one-to-one correspondence with the plurality of wheel cylinders 100, each pressure increasing valve 700 can control the wheel cylinder 100 corresponding thereto, so that more accurate pressure control of the wheel cylinder 100 is achieved.

When the brake pedal 500 is reset, the plurality of pressure reducing valves 800 may be turned on and the plurality of pressure increasing valves 700 may be turned off, to guide the brake fluid of the plurality of wheel cylinders 100 to the liquid reservoir (for example, the master liquid reservoir 250 or the redundant liquid reservoir 350), so as to reduce the pressures of the wheel cylinders 100. The brake fluid may be reused, to reduce costs. Moreover, because the plurality of pressure reducing valves 800 are in one-to-one correspondence with the plurality of wheel cylinders 100, each pressure reducing valve 800 can reduce the pressure of the wheel cylinder 100 corresponding thereto, so that more accurate pressure control of the wheel cylinder 100 is achieved.

In other words, through the coordination between the plurality of pressure increasing valves 700 and the plurality of pressure reducing valves 800, an amount of the brake fluid in each wheel cylinder 100 can be adjusted, to adjust the pressure of each wheel cylinder 100.

A vehicle 1000 in an embodiment of the present disclosure is described below with reference to FIG. 4. The vehicle 1000 includes the vehicle brake system 1 in the foregoing embodiments of the present disclosure.

The vehicle in the embodiment of the present disclosure uses the vehicle brake system 1 in the foregoing embodiments of the present disclosure, which has advantages such as strong braking force output, high braking response speed, and high braking safety.

Other compositions and operations of the vehicle brake system 1 and the vehicle having the same in the embodiments of the present disclosure are known to a person of ordinary skill in the art. Details are not described herein again.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of the present disclosure. In this specification, exemplary descriptions of the foregoing terms do not necessarily refer to the same embodiment or example.

Although the embodiments of the present disclosure have been shown and described, a person of ordinary skill in the art should understand that various changes, modifications, replacements, and variations may be made to the embodiments without departing from the principles and spirit of the present disclosure, and the scope of the present disclosure is as defined by the appended claims and their equivalents.

## Claims

1. A vehicle brake system (1), comprising:
a plurality of wheel cylinders (100);
a master pressure building module (200), the master pressure building module (200) being respectively connected to the plurality of wheel cylinders (100), and being configured to convey brake fluid to the plurality of wheel cylinders (100);
a redundant pressure building module (300), the redundant pressure building module (300) being connected to at least one wheel cylinder (100), and being configured to convey brake fluid to the at least one wheel cylinder (100); and
a master brake cylinder assembly (400), the master brake cylinder assembly (400) being respectively connected to the plurality of wheel cylinders (100), and being configured to convey brake fluid to the plurality of wheel cylinders (100).

2. The vehicle brake system (1) according to claim 1, having a plurality of braking modes between which the vehicle brake system (1) is automatically switchable,
in different braking modes, the master pressure building module (200), the redundant pressure building module (300), or the master brake cylinder assembly (400) separately conveying brake fluid to the wheel cylinders (100), or the master pressure building module (200) and the redundant pressure building module (300) jointly conveying brake fluid to the wheel cylinders (100), or the master pressure building module (200) and the master brake cylinder assembly (400) jointly conveying brake fluid to the wheel cylinders (100), or the redundant pressure building module (300) and the master brake cylinder assembly (400) jointly conveying brake fluid to the wheel cylinders (100).

3. The vehicle brake system (1) according to claim 1 or 2, wherein the master brake cylinder assembly (400) and the master pressure building module (200) are arranged separately and spaced apart.

4. The vehicle brake system (1) according to any of claims 1 to 3, wherein the master brake cylinder assembly (400) is mounted to the redundant pressure building module (300).

5. The vehicle brake system (1) according to any of claims 1 to 4, wherein a first output flow channel (210) is constructed in the master pressure building module (200); the first output flow channel (210) is connected to the plurality of wheel cylinders (100); a second output flow channel (310) is constructed in the redundant pressure building module (300); and the second output flow channel (310) is connected to the at least one wheel cylinder (100).

6. The vehicle brake system (1) according to claim 5, further comprising:
a first switching flow channel (410), the first switching flow channel (410) being respectively connected to the first output flow channel (210) and the master brake cylinder assembly (400), and the master brake cylinder assembly (400) being connected to the plurality of wheel cylinders (100) through the first switching flow channel (410).

7. The vehicle brake system (5) according to claim 1 or 6, further comprising:
a second switching flow channel (420), the second switching flow channel (420) being respectively connected to the second output flow channel (310) and the master brake cylinder assembly (400), and the master brake cylinder assembly (400) being connected to the plurality of wheel cylinders (100) through the second switching flow channel (420).

8. The vehicle brake system (1) according to any of claims 5 to 7, further comprising:
a master control valve (220), the master control valve (220) being arranged in the first output flow channel (210), and being configured to control connection/disconnection between the master pressure building module (200) and the plurality of wheel cylinders (100);
a redundant control valve (320), the redundant control valve (320) being arranged in the second output flow channel (310), and being configured to control connection/disconnection between the redundant pressure building module (300) and the at least one wheel cylinder (100); and
a master cylinder control valve (430), the master cylinder control valve (430) being mounted to at least one of the master pressure building module (200) and the redundant pressure building module (300), the master cylinder control valve (430) being connected between the master brake cylinder assembly (400) and the plurality of wheel cylinders (100), and being configured to control connection/disconnection between the master brake cylinder assembly (400) and the plurality of wheel cylinders (100).

9. The vehicle brake system (1) according to claim 8, further comprising:
a brake pedal (500), the brake pedal (500) being connected to the master brake cylinder assembly (400);
a displacement sensor (510), the displacement sensor (510) being configured to detect a movement position of at least one of the brake pedal (500) and a piston (450) of the master brake cylinder assembly (400);
a wheel cylinder pressure sensor (903), the wheel cylinder pressure sensor (903) being connected to the plurality of wheel cylinders (100), and being configured to detect pressures of the plurality of wheel cylinders (100); and
a controller (900), the controller (900) being respectively connected to the displacement sensor (510), a vehicle wheel speed sensor (901), the wheel cylinder pressure sensor (903), the master control valve (220), the redundant control valve (320), and the master cylinder control valve (430), the controller (900) being configured to control closing/opening of the master control valve (220), the redundant control valve (320), and the master cylinder control valve (430) based on a detection result of the displacement sensor (510) and a detection result of at least one of the vehicle wheel speed sensor (901) and the wheel cylinder pressure sensor (903).

10. The vehicle brake system (9) according to claim 1, wherein the controller (900) is further respectively connected to the master pressure building module (200) and the redundant pressure building module (300); and the controller (900) is configured to control, based on the detection result of the displacement sensor (510) and the detection result of at least one of the vehicle wheel speed sensor (901) and the wheel cylinder pressure sensor (903), the master pressure building module (200) and the redundant pressure building module (300) whether to build pressure.

11. The vehicle brake system (10) according to claim 1, wherein a plurality of controllers (900) are arranged, the plurality of controllers comprising a master module controller (9001) and a redundant module controller (9002);
the master module controller (9001) is respectively connected to the displacement sensor (510), the vehicle wheel speed sensor (901), the wheel cylinder pressure sensor (903), the master control valve (220), the redundant control valve (320), and the master cylinder control valve (430); the master module controller (9001) is configured to control, based on the detection result of the displacement sensor (510) and the detection result of at least one of the vehicle wheel speed sensor (901) and the wheel cylinder pressure sensor (903), closing/opening of the master control valve (220) and the master pressure building module (200) whether to build pressure;
the redundant module controller (9002) is respectively connected to the displacement sensor (510), the vehicle wheel speed sensor (901), the wheel cylinder pressure sensor (903), the master control valve (220), the redundant control valve (320), and the master cylinder control valve (430); and the master module controller (9001) is configured to control, based on the detection result of the displacement sensor (510) and the detection result of at least one of the vehicle wheel speed sensor (901) and the wheel cylinder pressure sensor (903), closing/opening of the redundant control valve (320) and whether the redundant pressure building module (300) to build pressure,
wherein the master module controller (9001) or the redundant module controller (9002) is configured to control, based on the detection result of the displacement sensor (510) and the detection result of at least one of the vehicle wheel speed sensor (901) and the wheel cylinder pressure sensor (903), the closing/opening of the master cylinder control valve (430).

12. The vehicle brake system (1) according to any of claims 9 to 11, further comprising:
a first angle sensor (230), configured to detect an angle change of a motor of the master pressure building module (200);
a first pressure sensor (240), configured to detect a pressure of brake fluid conveyed by the master pressure building module (200);
a second angle sensor (330), configured to detect an angle change of a motor of the redundant pressure building module (300);
a second pressure sensor (340), configured to detect a pressure of brake fluid conveyed by the redundant pressure building module (300); and
a third pressure sensor (440), configured to detect a pressure of brake fluid conveyed by the master brake cylinder assembly (400),
wherein the controller (900) is further respectively with the first angle sensor (230), the first pressure sensor (240), the second angle sensor (330), the second pressure sensor (340), and the third pressure sensor (440); and the controller (900) is configured to: determine whether the master pressure building module (200) is faulty based on detection results of the first angle sensor (230) and the first pressure sensor (240), determine whether the redundant pressure building module (300) is faulty based on detection results of the second angle sensor (330) and the second pressure sensor (340), and determine whether the master brake cylinder assembly (400) is faulty based on a detection result of the third pressure sensor (440).

13. The vehicle brake system (1) according to any of claims 1 to 12, further comprising:
a master liquid reservoir (250), the master liquid reservoir (250) being connected to the master pressure building module (200); and
a redundant liquid reservoir (350), the redundant liquid reservoir (350) being respectively connected to the redundant pressure building module (300), the master brake cylinder assembly (400), and the master liquid reservoir (250).

14. The vehicle brake system (1) according to any of claims 1 to 13, further comprising:
a brake pedal (500), the brake pedal (500) being connected to the master brake cylinder assembly (400);
a stroke simulator (600), the stroke simulator (600) being respectively connected to the master brake cylinder assembly (400) and the brake pedal (500), and being configured to feed back a damping force to the brake pedal (500); and
a simulator switch valve (610), the simulator switch valve (610) being respectively connected to the stroke simulator (600) and the master brake cylinder assembly (400), and being configured to control on/off the stroke simulator (600) and the master brake cylinder assembly (400).

15. The vehicle brake system (1) according to any of claims 1 to 14, further comprising:
a plurality of pressure increasing valves (700), the plurality of pressure increasing valves (700) being connected to the plurality of wheel cylinders (100) in one-to-one correspondence, and each pressure increasing valve (700) being respectively connected to the master pressure building module (200), the redundant pressure building module (300), and the master brake cylinder assembly (400); and
a plurality of pressure reducing valves (800), the plurality of pressure reducing valves (800) being connected to the plurality of wheel cylinders (100) in one-to-one correspondence, and each pressure reducing valve (800) being connected to the liquid reservoir.

16. A vehicle (1000), comprising the vehicle brake system (1) according to any of claims 1 to 15.
